# EUROPEAN PATENT APPLICATION

(11) **EP 4 716 160 A1**
(43) Date of publication of application: **25.03.2026**
(21) Application number: 24201592.3
(22) Date of filing: 20.09.2024
(51) Int. Cl.: H04L 12/403

(54) **DIAGNOSING AN ETHERNET COMMUNICATIONS SYSTEM**

(71) Applicant: NXP B.V., 5656 AG Eindhoven (NL)
(72) Inventor: VAN DER HEIJDEN, Rigor Hendrikus Lambertus, 5656AG Eindhoven (NL)
(74) Representative: Schmütz, Christian Klaus Johannes

(57) **Abstract**

The present disclosure relates to a coordinator Ethernet node for an Ethernet communication system, the coordinator Ethernet node comprising: an interface for coupling to a shared media of the Ethernet communication system, wherein the coordinator Ethernet node is configured to transmit a first beacon via the interface and to trigger a first arbitration cycle by transmitting the first beacon, wherein the coordinator Ethernet node is configured to transmit a second beacon via the interface after the end of the first arbitration cycle and to trigger a second arbitration cycle by transmitting the second beacon, wherein each arbitration cycle comprises for the coordinator Ethernet node and each follower Ethernet node of the Ethernet network an associated field, referred to as TO field, representing a transmit opportunity for the respective Ethernet node, and wherein at least one of the arbitration cycles comprises a further field, referred to as a diagnostic field for diagnosing the shared media. The present disclosure also relates to a method for the coordinator Ethernet node.

## Description

### TECHNICAL FIELD

The present disclosure relates to a coordinator Ethernet node of a communication system comprising further Ethernet nodes and a shared media. The present disclosure also relates to the Ethernet communication system and a method for the coordinator Ethernet node.

### BACKGROUND

Modem automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet.

Ethernet is a well-known technology, and the Institute of Electrical and Electronic Engineers (IEEE) 802.3 Working Group is a collection of standards that define physical layer and data link layer media access control (MAC) for wired Ethernet. An emerging IEEE standard that may be particularly applicable to in-vehicle networks is IEEE 802.3cg, which is a protocol for 10 Mb/s single twisted-pair Ethernet, also referred to as 10BaseT1S, that enables multiple nodes to connect to the same twisted-pair wire, also referred to as a "shared media". The IEEE 802.3cg physical layer (PHY) utilizes CSMA/CD (Carrier Sense Multiple Access, Collision Detection) or PLCA (Physical Layer Collision Avoidance) for media access control.

The 10 Mb/sec single twisted-pair PHY project in IEEE defined a multi-drop mode of operation where multiple end-nodes or bridges are connected to a single twisted-pair wire network segment. In Ethernet terms, this network would be called a half-duplex network segment. The project did not define a new Ethernet MAC so the IEEE 802.3 standard Clause 4 MAC is used in half-duplex mode. This however causes topics to be addressed with the target application of Automotive since the CSMA/CD is not deterministic.

One option to the topic to be address caused by CSMA/CD in automotive applications is to add logic to the PHY to avoid collisions. This is called PHY Level Collision Avoidance (PLCA). PLCA is a protocol specified by the IEEE 802.3cg to provide improved deterministic performance in in-vehicle networks. Although PLCA improves deterministic performance in an IEEE 802.3cg network, applications such as in-vehicle networks may present additional challenges.

In a multi-drop communication system, a plurality of Ethernet network nodes can be coupled to the same shared medium, such as the twisted-pair wire. An error in the shared medium can affect the communication system's ability to communicate. A short circuit between the two wires of the shared medium or an interruption of at least one wire of the shared medium may result that several Ethernet network nodes become unable communicate with other Ethernet network nodes anymore via the shared media. Diagnosis of the shared medium during the installation phase, prior to using of the communication system and/or before any phase of use of the communication system may be considered to check the reliability of data communication via the shared medium. A fault at the shared media, such as a short circuit between two wires of the shared media or a break in at least one of the wires of the shared media, may be detected at an early stage. As an effect, it would be desirable to be able to detect such a fault with low impact on the operation of the communication system.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

In accordance with a first aspect of the present disclosure, a Ethernet node is provided, which is referred to as a coordinator Ethernet node. The coordinator Ethernet node comprising an interface for coupling to a shared media of the Ethernet communication system, wherein the coordinator Ethernet node is configured to transmit a first beacon via the interface and to trigger a first arbitration cycle by transmitting the first beacon, wherein the coordinator Ethernet node is configured to transmit a second beacon via the interface after the end of the first arbitration cycle and to trigger a second arbitration cycle by transmitting the second beacon, wherein each arbitration cycle comprises for the coordinator Ethernet node and each follower Ethernet node of the Ethernet network an associated field, referred to as TO field, representing a transmit opportunity for the respective Ethernet node, and wherein at least one of the arbitration cycles comprises a further field, referred to as a diagnostic field for diagnosing the shared media.

In one or more embodiments, the coordinator Ethernet node is configured not to transmit data via the interface during a diagnostic period of the diagnostic field.

In one or more embodiments, the coordinator Ethernet node comprises a diagnosis unit, wherein the diagnosis unit is configured to perform an error diagnosis of the shared media via the interface within the diagnostic period of the diagnostic field.

In one or more embodiments, the diagnostic period is predefined.

In one or more embodiments, the coordinator Ethernet node is configured to determine the diagnostic period in response to and/or by an end of the diagnosis.

In one or more embodiments, the diagnostic unit is configured to control the diagnostic period.

In one or more embodiments, the first arbitration cycle comprises the diagnostic field referred to as the first diagnostic field.

In one or more embodiments, the TO fields of the first arbitration cycle are arranged between the first beacon and the first diagnostic field.

In one or more embodiments, the coordinator Ethernet node is configured to transmit the second beacon immediately after the first diagnostic field via the interface.

In one or more embodiments, the second arbitration cycle does not comprise a diagnostic field.

In one or more embodiments, the coordinator Ethernet node is configured to transmit a further beacon via the interface after the end of each arbitration cycle and to trigger a further arbitration cycle by transmitting the respective beacon, wherein only every K-th arbitration cycle comprises a diagnostic field, wherein K is a predefined integer greater than two.

In accordance with a second aspect of the present disclosure, an Ethernet communication system is provided. The Ethernet communication system comprising a coordinator Ethernet node, a plurality of follower Ethernet nodes, and a shared media, wherein each Ethernet node is coupled to the shared media.

In one or more embodiments, each Ethernet node is configured not to transmit data via its interface during the diagnostic period of the diagnostic field.

In one or more embodiments, each Ethernet node is configured to transmit data via its interface only during a time of the TO field associated with the respective Ethernet node.

In accordance with a third aspect of the present disclosure, a method for a coordinator Ethernet node for an Ethernet communication system is provided, wherein the coordinator Ethernet node comprising an interface for coupling to a shared media of the Ethernet network, and wherein the method comprising the steps: (a) transmitting a first beacon via the interface of the coordinator Ethernet node to trigger a first arbitration cycle by transmitting the first beacon, and (b) transmitting a second beacon via the interface of the coordinator Ethernet node after the end of the first arbitration cycle to trigger a second arbitration cycle by transmitting the second beacon, wherein each arbitration cycle comprises for the coordinator Ethernet node and each follower Ethernet node of the Ethernet network an associated field, referred to as TO field, representing a transmit opportunity for the respective Ethernet node, and wherein at least one of the arbitration cycles comprises a further field, referred to as a diagnostic field for diagnosing the shared media.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 schematically illustrates a simplified example of a communication system.
Figure 2 schematically illustrates a simplified example of a coordinator Ethernet node.
Figure 3 schematically illustrates a simplified example of a follower Ethernet node.
Figures 4 to 5 schematically illustrate simplified examples of a cycle.
Figure 6 schematically illustrate a simplified example of a flow chart of a method.

### DESCRIPTION OF EMBODIMENTS

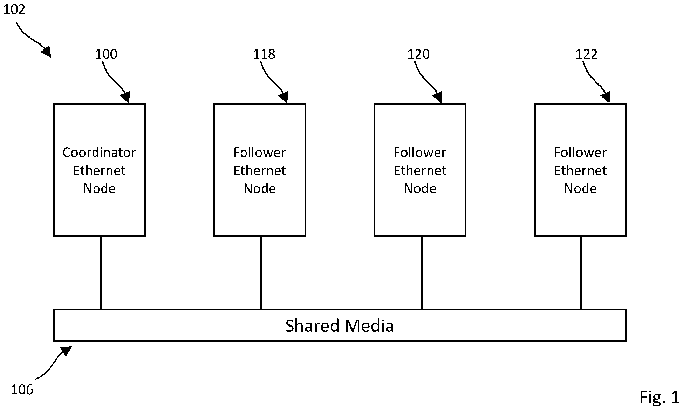

Figure 1 schematically illustrates an example of a communication system 102. The communication system 102 includes a plurality of Ethernet nodes 100, 118, 120, 122, which may also be referred to as Ethernet network nodes 100, 118, 120, 122 or as nodes 100, 118, 120, 122. One of the Ethernet nodes 100 may be referred to as coordinator Ethernet node 100. The other Ethernet nodes 118, 120, 122 may be referred to as subscriber Ethernet nodes 118, 120, 122 or follower Ethernet nodes 118, 120, 122. The communication system 102 further includes a shared media 106. The shared media 106 may be formed, for example, by a twisted pair of wires. Each of the Ethernet nodes 100, 118, 120, 122 may be coupled to the shared media 106 so that the Ethernet nodes 100, 118, 120, 122 may communicate with each other via the shared media 106.

Each Ethernet node 100, 118, 120, 122 may be configured as a device. In an example, an Ethernet node 100, 118, 120, 122 may form part of a device of a vehicle. For example, an electronic control unit, an airbag unit, an anti-lock brake unit, a steering unit, or another unit of the vehicle may each include an Ethernet node 100, 118, 120, 122. Each Ethernet node 100, 118, 120, 122 may include a processing unit and a circuit unit.

Although the Ethernet nodes 100, 118, 120, 122 of Figure 1 each include a plurality of schematically illustrated units, such as a media access control, MAC, unit 150 and a physical coding sublayer, PCS, unit 154, it is noted that each Ethernet node 100, 118, 120, 122 may include the illustrated units, fewer than the illustrated units, and/or additional other units.

In an example, the communication system 102 may be configured to utilize PLCA for media access to the shared media 106. The communication system 102 and/or each Ethernet node 100, 118, 120, 122 may be configured to be compatible with the IEEE 802.3cg protocol, which protocol may also be referred to as 10BaseT1s protocol. In an example, each Ethernet node 100, 118, 120, 122 may be configured to provide and/or perform a communication function via the shared media 106, in particular a physical layer communication via the shared media 106, according to the 10BaseT1s protocol.

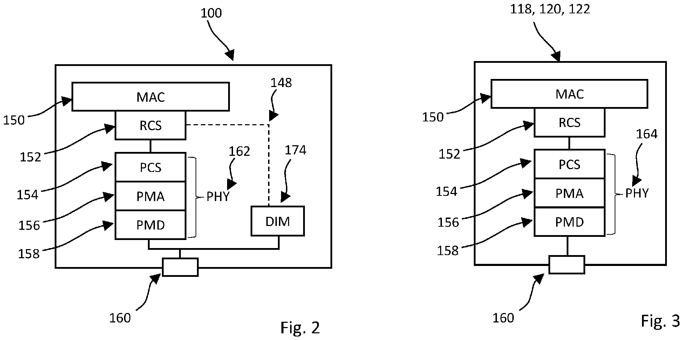

Figure 2 schematically illustrates an example of the Ethernet node 100, in particular the coordinator Ethernet node 100. Figure 3 schematically illustrates an example of another Ethernet node 118, 120, 122, in particular of a follower Ethernet node 118, 120, 122.

Each Ethernet node 100, 118, 120, 122 may include the MAC unit 150. The MAC unit 150 may be configured to receive a data packet, in particular from a higher network layer. The MAC unit 150 may be configured to divide a received data packet into a plurality of frames. Such a frame may also be referred to as an Ethernet frame. Once the MAC unit 150 has received a data packet and has divided the data packet into the corresponding Ethernet frames, the Ethernet node 100, 118, 120, 122 may have at least one Ethernet frame ready to be sent via the shared media 106.

The MAC unit 150 may be configured to perform media access control for the respective associated Ethernet node 100. Each Ethernet node 100, 118, 120, 122 may include a processing unit, such as a processor, in particular a microcontroller, a host processor, a host, a digital signal processor. The MAC unit 150 may be implemented by the processing unit of the respective Ethernet node 100, 118, 120, 122.

Each Ethernet node 100, 118, 120, 122 may include a respective PHY unit 162. In an example, the PHY unit 162 may be formed by the circuit unit of the respective Ethernet node 100, 118, 120, 122. Each PHY unit 162 may be configured to manage communication via the shared media 106, in particular according to IEEE 802.3cg. Each PHY unit 162 may be configured to receive digital data, in particular bits of an Ethernet frame, and generate an analog signal at an interface 160, which may also be referred to as a media dependent interface (MDI), representing the received digital data, in particular the bits of the Ethernet frame. Each PHY unit 162 may further be configured to receive an analog signal at the interface 160 representing digital data. Each PHY unit 162 may be configured to generate digital data, particularly in the form of Ethernet frames, based on the data received from an analog signal. Each PHY unit 162 may also be configured to protect the respective associated Ethernet node 100, 118, 120, 122 from external electrical conditions, such as electrical surges, which may occur on the shared media.

In an example, each PHY unit 162 may include a unit in the physical coding sublayer, also referred to as PCS unit 154. In an example, the PCS unit 154 may be formed by the circuit unit of the respective Ethernet node 100, 118, 120, 122. The PCS unit 154 may be configured in accordance with IEEE 802.3cg. In an example, each PHY unit 162 may include a physical medium attachment unit, also referred to as PMA unit 156. In an example, the PMA unit 156 may be formed by the circuit unit of the respective Ethernet node 100, 118, 120, 122. The PMA unit 156 may be configured in accordance with IEEE 802.3cg. In an example, each PHY unit 162 may include a unit in the physical media dependent layer, also referred to as PMD unit 158. In an example, the PMD unit 158 may be formed by the circuit unit of the respective Ethernet node 100, 118, 120, 122. The PMD unit 158 may be configured according to IEEE 802.3cg.

Each PCS unit 154 may be configured to perform data scrambling and recoding, in particular 4B5B recoding. Each PCS unit 154 may include a PCS transmit unit and a PCS receive unit, and a collision detection unit. The PCS transmit unit may include a scrambler and a unit for 4bit-5bit encoding. Each PCS receive unit may include a descrambler and a unit for 4bit-5bit decoding. In the transmit direction, each PCS unit 154 may be configured to translate data words each comprising 4 bits into data words each comprising 5 bits. The 5-bit words can be transmitted to the PMA unit 156. The 5-bit word may also be referred to as a 5-bit symbol. In the reverse direction, i.e. receive direction, the PCS unit 154 can receive data words that are each 5 bits long. In the receive direction, the PCS unit 154 may be configured to translate a data word comprising 5 bits into a data word comprising 4 bits. The 4-bit word may also be referred to as a 4-bit symbol.

Each PMA unit 156 may be configured to receive, in the transmit direction, data from a PCS unit 154 and generate an analog output signal based on the received data that represents the data received by the PCS unit 154. The data received by the PCS unit may be represented by the analog output signal according to a predefined encoding, such as differential Manchester encoding. Each PMA unit 156 may further be configured to receive, in the receive direction, an analog signal representing data. The data received via the analog signal may be translated by the PMA unit 156 into words, each comprising 5 bits. The words may represent the data of the analog signal.

Each PMD unit 158 can adapt the analog signal in the transmit direction, in particular with respect to the length of pulses or the edge steepness of pulses. Each PMD unit 158 can detect the analog signal in the receive direction. Each PMD unit 158 may be coupled to the MDI interface 160 of the respective Ethernet node 100, 118, 120, 122 and/or form the MDI interface 160.

In principle, a collision in the transmission of different Ethernet frames, in particular from different Ethernet nodes 100, 118, 120, 122, via the shared media 106 should be avoided. Physical layer collision avoidance, also referred to as PLCA, may therefore be implemented by each Ethernet node 100, 118, 120, 122 in accordance with IEEE 802.3cg. According to the PLCA, each Ethernet node 100, 118, 120, 122 can be assigned a unique, dedicated identifier. The transmission via the shared media 106 may be performed in cycles, wherein in each cycle each Ethernet node 100, 118, 120, 122 is assigned a slot corresponding to the respective identifier. Each Ethernet node 100, 118, 120, 122 is authorized to perform a transmission of data in the respective associated slot.

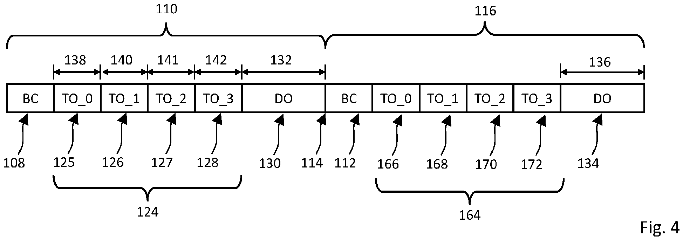

Figure 4 schematically illustrates an example of a cycle 110, which may also be referred to as arbitration-and-diagnosis cycle 110 or as AT cycle 110. The AT cycle 110 comprises a beacon 108, a sequence 124 of fields 125, 126, 127, 128, each referred to as TO field 125, 126, 127, 128, and another field 130 referred to as DO field 130. Further explanations in connection with the AT cycle 110 will follow at other sections of the present publication.

In an example, each Ethernet node 100, 118, 120, 122 may comprise a unit 152 in the reconciliation sublayer, wherein said unit 152 is also referred to as RCS unit 152. The PLCA may be provided by the RCS unit 152 and/or may be implemented in the RCS unit 152. The RCS unit 152 may be configured to detect whether an Ethernet frame in the MAC unit 150 is ready to be sent.

The coordinator Ethernet node 100, in particular the RCS unit 152 of the coordinator Ethernet node 100, may be configured to generate a first beacon 108. The first beacon 108 may comprise at least one beacon symbol or multiple beacon symbols. Each beacon symbol may comprise multiple predefined bits. If the first beacon 108 comprises multiple beacon symbols, each beacon symbol may be identical. The first beacon 108 and/or each beacon symbol may represent the beginning of a new AT cycle 110.

The RCS unit 152 of the coordinator Ethernet node 100 may be coupled to the associated PHY unit 162. The first beacon 108 generated by the RCS unit 152 may be transmitted by the RCS unit 152 to the PHY unit 162, in particular to the PCS unit 154. The coordinator Ethernet node 100, in particular the associated RCS unit 152, may be configured to synchronize in time to a new AT cycle 110 by transmitting the first beacon 108.

The PHY unit 162 of the coordinator Ethernet node 100 may generate a signal at the associated interface 160 that represents the first beacon 108. As an effect, the PHY unit 162 may be configured to transmit the first beacon 108 via the interface 160. The signal representing the first beacon 108 generated by the PHY unit 162 at the interface 160 may be transmitted to the interfaces 160 of the follower Ethernet nodes 118, 120, 122 via the shared media 106.

Each follower Ethernet node 118, 120, 122 may comprise a MAC unit 150, an RCS unit 152, a PCS unit 154, a PMA unit 156, and a PMD unit 158. Each follower Ethernet node 118, 120, 122 may comprise a PHY unit 164 comprising the PCS unit 154, the PMA unit 156, and the PMD unit 158. The interface 160 of each follower Ethernet node 118, 120, 122 may be formed by the respective associated PHY unit 164 and/or the associated PMD unit 158.

It was previously explained that a signal representing a first beacon 108 may be generated by the coordinator Ethernet node 100 at the associated interface 160. The signal may be sent to each follower Ethernet node 118, 120, 122 via the associated interface 160, wherein the respective PHY unit 164 of each follower Ethernet node 118, 120, 122 may be configured to transmit the first beacon 108 to the RCS unit 152 of the respective follower Ethernet node 118, 120, 122 based on the received signal. The RCS unit 152 of the respective follower Ethernet node 118, 120, 122 may be configured to receive the first beacon 108.

Each Ethernet node 100, 118, 120, 122, in particular each follower Ethernet node 118, 120, 122 and/or the respective associated RCS unit 152, may be configured to detect the start of the new AT cycle 110 in response to receiving the first beacon 108. Each Ethernet node 100, 118, 120, 122, in particular each follower Ethernet node 118, 120, 122 and/or the respective associated RCS unit 152, may be configured to synchronize in time to the new AT cycle 110 by receiving the first beacon 108.

If the coordinator Ethernet node 100 generates a new first beacon 108 as well as transmits it via the interface 160, then the coordinator Ethernet node 100 triggers a new AT cycle 110 by transmitting the new first beacon 108.

In an example, a AT cycle 110 comprises a beacon 108, a sequence 124 of fields 125, 126, 127, 128, each referred to as TO field 125, 126, 127, 128, and another field 130 referred to as DO field 130. Each TO field 125, 126, 127, 128 may represent a transmit opportunity. The DO field 130 may represent a diagnostic opportunity. The DO field 130 may also be referred to as a diagnostic field 130.

Each TO field 125, 126, 127, 128 may be assigned to exactly one of the Ethernet nodes 100, 118, 120, 122, so that a unique assignment is predefined between each TO field 125, 126, 127, 128 and the assigned Ethernet node 100, 118, 120, 122. Each Ethernet node 100, 118, 120, 122 may be uniquely assigned to exactly one TO field 125, 126, 127, 128. As an effect, there may be a bijective mapping between the TO fields 125, 126, 127, 128 and the Ethernet nodes 100, 118, 120, 122.

Each Ethernet node 100, 118, 120, 122 may have stored to which TO field 125, 126, 127, 128 the respective Ethernet node 100, 118, 120, 122 is assigned. Each Ethernet node 100, 118, 120, 122 may be configured to transmit data of an Ethernet frame only in the respective assigned TO field 125, 126, 127, 128 via the respective associated interface 160.

The RCS unit 152 of each Ethernet node 100, 118, 120, 122 may be configured to detect whether the respective associated MAC unit 150 is ready to transmit an Ethernet frame via the respective associated PHY unit 162 and the associated interface 160. If the MAC unit 150 of an Ethernet node 100, 118, 120, 122 is ready to transmit an Ethernet frame, the RCS unit 152 of the respective Ethernet node 100, 118, 120, 122 may be configured to allow transmission of the Ethernet frame only in the TO field 125, 126, 127, 128 associated with the respective Ethernet node 100, 118, 120, 122. In addition, the RCS unit 152 of the respective Ethernet node 100, 118, 120, 122 may be configured to prevent transmission of the Ethernet frame from the associated MAC unit 150 in a TO field 125, 126, 127, 128 that is not associated with the respective Ethernet node 100, 118, 120, 122.

In an example, the first coordinator Ethernet node 100 may be associated with the first TO field 125, and/or vice versa. The first follower Ethernet node 118 may be assigned to the second TO field 126, and/or vice versa. The second follower Ethernet node 120 may be assigned to the third TO field 127, and/or vice versa. The third follower Ethernet node 122 may be associated with the fourth TO field 128, and/or vice versa.

The coordinator Ethernet node 100 may be configured to and may have the opportunity to transmit an Ethernet frame in the first TO field 125 and/or during the associated time 138. If the coordinator Ethernet node 100, in particular the associated MAC unit 150, is not ready to transmit an Ethernet frame, the coordinator Ethernet node 100 may allow the time 138, which is in particular a minimum duration of the first TO field 125, to elapse without a data transmission. If the coordinator Ethernet node 100, in particular the associated MAC unit 150, is ready to transmit an Ethernet frame, the coordinator Ethernet node 100 may transmit said Ethernet frame in the first TO field 125 and/or during the associated time 138. The time 138 of the first TO field 125 may extend to the duration of the transmission of said Ethernet frame and, in particular, a preceding predefined commit symbol. The commit symbol may be used to initiate transmission of the Ethernet frame in the first TO field 125 and/or during the associated time 138. The coordinator Ethernet node 118 may be configured to transmit the commit symbol at the beginning of the first TO field 125 and/or at the beginning of the associated time 138. The minimum time 138 of the first TO field 125 may be predefined. The maximum time 138 of the first TO field 125 may be defined by the number of bits of the commit symbol and the Ethernet frame available for transmission in the MAC unit 150 of the coordinator Ethernet node 100.

In an example, the first follower Ethernet node 118 may be configured to and may have the opportunity to transmit an Ethernet frame in the second TO field 126 and/or during the associated time 140. If the first follower Ethernet node 118, in particular the associated MAC unit 150, is not ready to transmit an Ethernet frame, the first follower Ethernet node 118 may allow the time 140, which is in particular a minimum duration of the second TO field 126, to elapse without a data transmission. If the first follower Ethernet node 118, in particular the associated MAC unit 150, is ready to transmit an Ethernet frame, the first follower Ethernet node 118 may transmit said Ethernet frame in the second TO field 126 and/or during the associated time 140. The time 140 of the second TO field 126 may extend to the duration of the transmission of said Ethernet frame and, in particular, a preceding predefined commit symbol. The commit symbol may be used to initiate transmission of the Ethernet frame 118 in the second TO field 126 and/or during the associated time 140. The first follower Ethernet node 118 may be configured to transmit the commit symbol at the beginning of the second TO field 126 and/or at the beginning of the associated time 140. The minimum time 140 of the second TO field 140 may be predefined. The maximum time 140 of the second TO field 126 may be defined by the number of bits of the commit symbol and the Ethernet frame available for transmission in the MAC unit 150 of the first follower Ethernet node 118.

The explanations, features, technical advantages and effects explained in the preceding paragraph may apply in an analogous manner to each follower Ethernet node 120, 122 and the respective associated TO field 127, 128. By way of illustration, a further example is explained with reference to the second follower Ethernet node 120.

In an example, the second follower Ethernet node 120 may be configured to and may have the opportunity to transmit an Ethernet frame in the third TO field 127 and/or during an associated time 141. If the second follower Ethernet node 120, in particular the associated MAC unit 150, is not ready to transmit an Ethernet frame, the second follower Ethernet node 120 may allow the time 141, which is in particular a minimum duration of the third TO field 127, to elapse without a data transmission. If the second follower Ethernet node 120, in particular the associated MAC unit 150, is ready to transmit an Ethernet frame, the second follower Ethernet node 120 may transmit said Ethernet frame in the third TO field 127 and/or during the associated time 141. The time 141 of the third TO field 127 may extend to the duration of the transmission of said Ethernet frame and, in particular, a preceding predefined commit symbol. The commit symbol may be used to initiate the transmission of the Ethernet frame in the third TO field 127 and/or during the associated time 141. The second follower Ethernet node 120 may be configured to transmit the commit symbol at the beginning of the third TO field 127 and/or at the beginning of the associated time 141. The minimum time 141 of the third TO field 141 may be predefined. The maximum time 141 of the third TO field 127 may be defined by the number of bits of the commit field and the Ethernet frame that is available for transmission in the MAC unit 150 of the second subsequent Ethernet node 120.

Each Ethernet node 100, 118, 120, 122 may only have the opportunity to transmit an Ethernet frame in the associated TO field 120, 196, 107 20, 128. As an effect, a collision associated with the transmission of multiple Ethernet frames via the shared media 106 may be effectively prevented.

In an example, the sequence 124 of TO fields 125, 126, 127, 128 of a AT cycle 110 directly follows the beacon 108 of the respective AT cycle 110. No pause or a (small) pause may be provided between the beacon 108 of the AT cycle 110 and the first TO field 125. The sequence 124 of the TO fields 125, 126, 127, 128 may be predefined. No pause or a (small) pause may be provided between each two consecutives TO fields 125, 126, 127, 128.

In an example, none of the Ethernet nodes 100, 118, 120, 122 transmits data via the respective associated interface 160 in a AT cycle 110 after the sequence 124 of TO fields 125, 126, 127, 128 of the AT cycle 110 and/or after the last TO field 128 of the AT cycle 110. The Ethernet nodes 100, 118, 120 122 may have the next opportunity to transmit data, in particular Ethernet frames, in the subsequent AT cycle 116. The AT cycle 116 may also be referred to as the second AT cycle 116.

The present disclosure is based on the idea that, in an example, the coordinator Ethernet node 100 is configured not to transmit the beacon 112 of the next (second) AT cycle 116 directly after the end of the sequence 124 of TO fields 125, 126, 127, 128 of the AT cycle 110 via the interface 160. Instead, in an example, the coordinator Ethernet node 100 may be configured not to transmit data via the interface 160 of the coordinator Ethernet node 100 during a diagnosis field 130 of the AT cycle 110 and/or during the associated time 132. Each follower Ethernet node 118, 120, 122 may be configured, in an example, not to transmit data via the interface 160 of the respective Ethernet node 118, 120, 122 during the diagnosis field 130 of the AT cycle 110 and/or during the associated time 132. As an effect, the coordinator Ethernet node 100 and, in particular, each follower Ethernet node 118, 120, 122 may prevent data transmission during the time 132 of the diagnosis field 130 to provide the possibility to diagnose the shared media 106 and/or the interfaces 160 of the Ethernet nodes 100, 118, 120, 122. The time 132 of the diagnosis field 130 may also be referred to as diagnosis time 132.

In an example, at least one of the AT cycles 110, 116 includes a diagnosis field 130. The diagnosis field 130 may be used to diagnose the shared media 106. In an example, no data, in particular no bits from an Ethernet frame and/or no bits from a commit symbol, are transmitted during the diagnosis field 130 and/or during the associated time 132. Each of the Ethernet nodes 100, 118, 120, 122 may be configured accordingly. The time 132 of the diagnosis field 130 may be predefined. For example, the time 132 of the diagnosis field 130 may have at least the minimum duration of a TO field 125, 126, 127, 128 and/or at most fifty or hundred times the minimum duration of a TO field 125, 126, 127, 128.

During the time 132 of a diagnosis field 130, the shared media 106 may be inactive so that an undisturbed diagnosis of the shared media 106 is possible. In particular, during the time 132 of the diagnosis field 130, a diagnosis of the shared media 106 may be prevented from being disturbed by signals from data to be transmitted. As an effect, a precise and at the same time reliable diagnosis of the shared media 106 may be performed during the time 132 of the diagnosis field 130. Diagnosing the shared media 106 during the time 132 of the diagnosis field 130 also provides the advantage that the diagnosis may be performed while the communication system 102 is in operation. Each of the Ethernet nodes 100, 118, 120, 122 may remain operational during the diagnosis and/or each of the Ethernet nodes 100, 118, 120, 122 may remain coupled to the shared media 106 via the respective associated interface 160 during the diagnosis.

The coordinator Ethernet node 100, in particular the RCS unit 152 of the coordinator Ethernet node 100, may be configured to generate the second beacon 112. The second beacon 112 may be identical to the first beacon 118. The foregoing explanations, features, technical effects and advantages that have been explained in connection with the first beacon 108 may apply in an analogous manner to the second beacon 112. The second beacon 112 may comprise at least one beacon symbol or multiple beacon symbols. If the second beacon 112 comprises multiple beacon symbols, each beacon symbol may be identical. The second beacon 112 and/or a beacon symbol of the second beacon 112 may represent the beginning of the second AT cycle 116.

In an example, the second beacon 112 generated by the RCS unit 152 of the coordinator Ethernet node 100 may be transmitted to the PHY unit 162, in particular the PCS unit 154. The coordinator Ethernet node 100, in particular the associated RCS unit 152, may be configured to synchronize in time to a new (second) AT cycle 112 by transmitting the second beacon 112 and in particular by receiving the beacon symbol by the RCS unit 152..

The PHY unit 162 of the coordinator Ethernet node 100 may generate a signal at the associated interface 160 that represents the second beacon 116. As an effect, the PHY unit 162 may be configured to transmit the second beacon 116 via the interface 160. The signal representing the second beacon 116 generated by the PHY unit 162 at the interface 160 may be transmitted to the interfaces 160 of the follower Ethernet nodes 118, 120, 122 via the shared media 106. The signal may be transmitted to each follower Ethernet node 118, 120, 122 via the associated interface 160, wherein the respective PHY unit 164 may be configured to transmit the second beacon 112 to the RCS unit 152 of the respective follower Ethernet node 118, 120, 122 based on the received signal. The RCS unit 152 of the respective follower Ethernet node 118, 120, 122 may be configured to receive the second beacon 112.

Each follower Ethernet node 118, 120, 122, in particular the respective associated RCS unit 152, may be configured to detect the beginning of a new (second) AT cycle 116 in response to receiving the second beacon 112. Each follower Ethernet node 118, 120, 122, in particular the respective associated RCS unit 152, may be configured to synchronize in time to the new (second) AT cycle 116 by receiving the second beacon 112.

As an effect, if the coordinator Ethernet node 100 generates a new (second) beacon 112 as well as transmits it via the interface 160, then the coordinator Ethernet node 100 triggers a new (second) AT cycle 116 by transmitting the new (second) beacon 112.

In an example shown in Figure 4, the coordinator Ethernet node 110 may be configured to generate the beacon symbols 108, 112 such that the AT cycles 110, 116 directly follow each other. In an analogous manner, additional AT cycles (not shown) may be triggered by the coordinator Ethernet node 110, in particular such that a sequence of AT cycles 110, 116 are triggered.

In an example, the second AT cycle 116 comprises the second beacon 112, a sequence 165 of fields 166, 168, 170, 172, each referred to as a TO field 166, 168, 170, 172, each representing a transmission opportunity. In addition, the second AT cycle 116 may comprise another field 134, referred to as DO field 134, representing a diagnosis opportunity. The DO field 134 may also be referred to as a second DO field 134. As an effect, a regularly repeated diagnosis may be performed, and the time between diagnoses may be kept particularly small. The time between two diagnoses may correspond approximately to the duration of a AT cycle 110, 116.

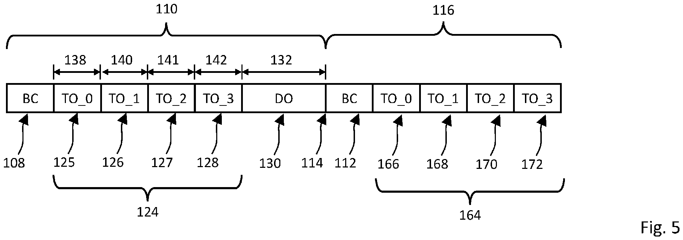

In an example, it may be sufficient if not every AT cycle 110, 116 comprises a diagnosis field 130, 134. Figure 5 schematically illustrates an example in which the first AT cycle 110 comprises a diagnosis field 130, wherein the second AT cycle 116 does not comprise a diagnosis field. As an effect, the second AT cycle 116 may be formed by the second beacon 112 and the immediately following sequence 164 of TO fields 166, 168, 170, 172. By omitting the diagnosis field from the second AT cycle 116, bandwidth may be efficiently utilized to transmit data via the shared media 106. In an example, it may be provided that only each K-th AT cycle 110, 116 comprises a diagnosis field 130. In an example, the other AT cycles 116 may each comprise no diagnosis field. The parameter K may be a predefined integer greater than 1, 2, 3, 5, 10 or 20. In an example, only every other AT cycle 110, 116 may comprise a diagnosis field 130. With reference to the example of Figure 5, the second AT cycle 116 may be directly followed by the first AT cycle 110, and this first AT cycle 110 may again be followed by the second AT cycle 116. The combination of the two AT cycles 110, 116 may be repeated. In an example if every other AT cycle 110, 116 only may comprise a diagnosis field 130. In an analogous manner, a regularity of the AT cycles 110, 116 may be provided if, for example, only every third, every fifth, every tenth or every twentieth AT cycle 110, 116 comprises a diagnosis field 130, and the other AT cycles 110, 116 do not comprise a diagnosis field. If not every AT cycle 110, 116, but for example only every K-th AT cycle 110, 160 comprises a diagnosis field 130, at least two advantages may be achieved. Firstly, the diagnosis field 130 allows regular diagnosis of the shared media 106 and, secondly, a large bandwidth may be used to transmit data via the shared media 106.

In an example, a diagnosis unit 174 may be provided. The diagnosis unit 174 may be configured to be coupled to the shared media 106. The diagnosis unit 174 may be configured to perform diagnosis on the shared media 106. In an example, the diagnosis unit 174 may be configured to perform a diagnosis such as to detect a possible short circuit between two wires of the shared media 106 and/or a possible break in one of the wires of the shared media 106. For example, the diagnosis unit 174 may be configured to generate a test voltage with a predefined voltage profile for the diagnosis such that the test voltage is applied between two wires of the shared media 106. The diagnosis unit 174 may be configured to detect a voltage actually existing between the wires and/or a current generated by the test voltage in at least one of the wires for the diagnosis. In an example, the diagnosis unit 174 may be configured to detect whether or not a fault exists in the shared media 106 based on the detected voltage and/or current as a result of the diagnosis. The diagnosis may also be referred to as a fault diagnosis. The fault may be a short circuit between two wires of the shared media and/or a break in at least one of the wires of the shared media.

In an example, at least one of the Ethernet nodes 100, 118, 120, 122 may comprise the diagnosis unit 174. The interface 160 of the Ethernet node 100, 180, 120, 122 comprising the diagnosis unit 174 may be coupled to the diagnosis unit 174. The diagnosis unit 174 may be coupled to the shared media 106 via the interface 160.

Figure 2 schematically illustrates an example of the coordinator Ethernet node 100, wherein the coordinator Ethernet node 100 comprises the diagnosis unit 174. The diagnosis unit 174 may be connected to the interface 160 of the coordinator Ethernet node 100. The diagnosis unit 174 may be configured to detect a diagnosis field 130, 134 of a AT cycle 110, 116 via the interface 160. In another example, the diagnosis unit 174 may be coupled, in particular via a control link 148, to the RCS unit 152 of the coordinator Ethernet node 100, wherein the diagnosis unit 174 may be controlled by the RCS unit 152 such that the diagnosis unit 174 performs a diagnosis during a diagnosis field 130, 134. In an example, the RCS unit 152 may be configured to send a control signal to the diagnosis unit 174 via the control link 148 after the sequence 124 of TO fields 125, 126, 127, 128 and/or during the diagnosis field 130, wherein the control signal represents an instruction to the diagnosis unit 174 to perform the diagnosis. In an example, the diagnosis unit 174 may be configured to transmit a status field via the control link 148 to the RCS unit 152, wherein the status signal may represent a start and/or an end of the diagnosis. The RCS unit 152 of the coordinator Ethernet node 100 may be configured to adjust the diagnosis period 132 based on the status signal. As an effect, the diagnosis unit 174 may control the diagnosis period via the status signal and the RCS unit 152, in particular such that the diagnosis unit 174 may perform a full diagnosis during the diagnosis field 130. Also, in an example, the end of the diagnosis may be reported by the diagnosis unit 174 to the RCS unit 152 via the status signal. With the end of the diagnosis, the RCS unit 152 may end the diagnosis time 132 of the diagnosis field 130. Thereafter, the coordinator Ethernet node 100, in particular the associated RCS unit 152, may generate the second beacon 112 so that the new (second) AT cycle 116 is triggered. As an effect, the time required for a diagnosis may be minimized so that a high bandwidth is available for transmitting data via the shared media 106.

Figure 1 schematically illustrates an example of a communication system 102. The communication system 102 comprises a plurality of Ethernet nodes 100, 118, 120, 122. At least one of the Ethernet nodes 100, 118, 120, 122 may be a coordinator Ethernet node 100. The other Ethernet nodes 100, 118, 120, 122 may be follower Ethernet nodes 118, 120, 122. The communication system 102 may further comprise the shared media 106. Each of the Ethernet nodes 100, 118, 120, 122 may be coupled to the shared media 106 via an associated signal connection so as to allow communication between the Ethernet nodes 100, 180, 120, 122 via the shared media 106.

For the communication system 102, reference may be made to the preceding explanations, features, technical effects and advantages in an analogous manner as explained for the Ethernet nodes 100, 118, 120, 122.

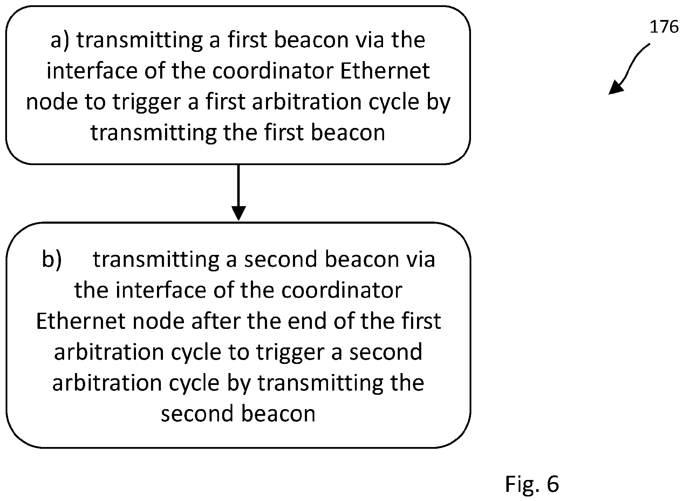

Figure 6 schematically illustrates an example of a flowchart for a method 176 of the present disclosure. The method is for the coordinator Ethernet node 100. The method 176 may comprise at least the following steps:
a) transmitting a first beacon 108 via the interface 160 of the coordinator Ethernet node 100 to trigger a first arbitration cycle 110 by transmitting the first beacon 108, and
b) transmitting a second beacon 112 via the interface 160 of the coordinator Ethernet node 100 after the end of the first arbitration cycle 110 to trigger a second arbitration cycle 116 by transmitting the second beacon 112.

For the method, reference may be made to the preceding explanations, features, technical effects and advantages in an analogous manner as explained for the Ethernet nodes 100, 118, 120, 122 and the communication system 102.

Although the described exemplary embodiments disclosed herein focus on modules, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A coordinator Ethernet node for an Ethernet communication system, the coordinator Ethernet node comprising:
an interface for coupling to a shared media of the Ethernet communication system,
wherein the coordinator Ethernet node is configured to transmit a first beacon via the interface and to trigger a first arbitration cycle by transmitting the first beacon,
wherein the coordinator Ethernet node is configured to transmit a second beacon via the interface after the end of the first arbitration cycle and to trigger a second arbitration cycle by transmitting the second beacon,
wherein each arbitration cycle comprises for the coordinator Ethernet node and each follower Ethernet node of the Ethernet network an associated field, referred to as TO field, representing a transmit opportunity for the respective Ethernet node, and
wherein at least one of the arbitration cycles comprises a further field,
referred to as a diagnostic field for diagnosing the shared media.

2. The coordinator Ethernet node according to the preceding claim, wherein the coordinator Ethernet node is configured not to transmit data via the interface during a diagnostic period of the diagnostic field.

3. The coordinator Ethernet node according to any of the preceding claims, wherein the coordinator Ethernet node comprises a diagnosis unit, wherein the diagnosis unit is configured to perform an error diagnosis of the shared media via the interface within the diagnostic period of the diagnostic field.

4. The coordinator Ethernet node according to the preceding claim, wherein the diagnostic period is predefined.

5. The coordinator Ethernet node according to claim 3, wherein the coordinator Ethernet node is configured to determine the diagnostic period in response to and/or by an end of the diagnosis.

6. The coordinator Ethernet node according to claim 4 or 5, wherein the diagnostic unit is configured to control the diagnostic period.

7. The coordinator Ethernet node according to any of the preceding claims, wherein the first arbitration cycle comprises the diagnostic field referred to as the first diagnostic field.

8. The coordinator Ethernet node according to the preceding claim, wherein the TO fields of the first arbitration cycle are arranged between the first beacon and the first diagnostic field.

9. The coordinator Ethernet node according to the preceding claim, wherein the coordinator Ethernet node is configured to transmit the second beacon immediately after the first diagnostic field via the interface.

10. The coordinator Ethernet node according to any of the preceding claims, wherein the second arbitration cycle does not comprise a diagnostic field.

11. The coordinator Ethernet node according to any of the preceding claims, wherein the coordinator Ethernet node is configured to transmit a further beacon via the interface after the end of each arbitration cycle and to trigger a further arbitration cycle by transmitting the respective beacon, wherein only every K-th arbitration cycle comprises a diagnostic field, wherein K is a predefined integer greater than two.

12. An Ethernet communication system, comprising: a coordinator Ethernet node according to any of the preceding claims 1 to 11, a plurality of follower Ethernet nodes, and a shared media, wherein each Ethernet node is coupled to the shared media.

13. The Ethernet communication system according to the preceding claim, wherein each Ethernet node is configured not to transmit data via its interface during the diagnostic period of the diagnostic field.

14. The Ethernet network according to any of the preceding claims 12 to 13, wherein each Ethernet node is configured to transmit data via its interface only during a time of the TO field associated with the respective Ethernet node.

15. Method for a coordinator Ethernet node for an Ethernet communication system, wherein the coordinator Ethernet node comprising an interface for coupling to a shared media of the Ethernet network, and wherein the method comprising the steps:
a) transmitting a first beacon via the interface of the coordinator Ethernet node to trigger a first arbitration cycle by transmitting the first beacon,
b) transmitting a second beacon via the interface of the coordinator Ethernet node after the end of the first arbitration cycle to trigger a second arbitration cycle by transmitting the second beacon,
wherein each arbitration cycle comprises for the coordinator Ethernet node and each follower Ethernet node of the Ethernet network an associated field, referred to as TO field, representing a transmit opportunity for the respective Ethernet node, and
wherein at least one of the arbitration cycles comprises a further field, referred to as a diagnostic field for diagnosing the shared media.
